# EUROPÄISCHE PATENTSCHRIFT

(11) **EP 2 236 410 B1**
(45) Veröffentlichungstag und Bekanntmachung des Hinweises auf die Patenterteilung: **05.03.2014**
(21) Anmeldenummer: 10157753.4
(22) Anmeldetag: 25.03.2010
(51) Int. Cl.: B63H 25/52, B63H 25/38, F16C 3/02, B29C 70/32, B29C 70/86

(54) **Ruderschaft**
Rudder stock
Mèche de gouvernail

(30) Priorität: 01.04.2009 DE 102009015234; 28.05.2009 DE 102009022989
(43) Veröffentlichungstag der Anmeldung: 06.10.2010
(73) Patentinhaber: becker marine systems GmbH & Co. KG, 21079 Hamburg (DE)
(72) Erfinder: Kuhlmann, Henning, 22559, Hamburg (DE)
(74) Vertreter: Richter Werdermann Gerbaulet Hofmann

(56) Entgegenhaltungen:
- EP-A1- 0 579 533
- EP-A2- 2 039 497
- DE-A1- 19 524 903
- DE-U1-202005 013 583
- DE-U1-202007 012 480
- FR-A1- 2 780 460
- GB-A- 2 258 032
- US-B1- 6 227 131

## Beschreibung

Die Erfindung betrifft einen Ruderschaft für Ruder für Wasserfahrzeuge.

Durch Ruderschäfte wird im Allgemeinen die Steuerbewegung der an Bord eines Wasserfahrzeuges, insbesondere eines Schiffes, vorgesehenen Rudermaschine auf das Ruder übertragen. Ruderschäfte für Ruder für Wasserfahrzeuge werden vorwiegend aus Metall, insbesondere aus Schmiedestahl, hergestellt. Insbesondere bei kommerziellen Schiffen, wie Containerschiffen, Tankern oder Kreuzfahrtschiffen, werden Ruderschäfte mit größeren Längen, teilweise mit Längen über 10 m, benötigt. Beim Schmieden derartiger Ruderschäfte können sich insofern Schwierigkeiten ergeben, als hierfür weltweit nur eine relativ geringe Anzahl von Schmieden mit entsprechender Kapazität zur Verfügung stehen. Hinzukommt, dass derartige Ruderschäfte oftmals auch große Durchmesser und somit ein hohes Gewicht aufweisen, das im Extremfall die 100 t-Grenze überschreiten kann. Dies erfordert wiederum besonders ausgebildete und stabile Konstruktionen der Lagerung und Aufhängung des Ruderschaftes im Schiff sowie des Ruderblattes am Ruderschaft.

Ruderschäfte weisen im Allgemeinen einen runden Querschnitt auf und werden sowohl auf Biegung als auch auf Torsion beansprucht, wobei die auftretenden und zu absorbierenden Biegelasten normalerweise um ein Vielfaches höher sind als die Torsionslasten. Von daher müssen die Ruderschäfte bezüglich ihrer Biegesteifigkeit bzw. -festigkeit entsprechend ausgelegt werden und es finden bei kommerziellen Schiffen überwiegend qualitativ hochwertige Schmiedestahlwerkstoffe Verwendung. Hierdurch unterscheiden sich Ruderschäfte von auf anderen technischen Gebieten verwendeten Wellen, wie z. B. dem Automobilbau, die häufig ausschließlich oder zumindest überwiegend auf Torsionen belastet werden. Des Weiteren unterscheiden sich Ruderschäfte durch ihre Dimensionierungen von anderen Wellen. So sind Ruderschäfte für Ruder für Wasserfahrzeuge, für die die vorliegende Erfindung besonders geeignet ist, normalerweise mindestens 3 m lang und mindestens 3,5 t schwer.

Ferner treten, insbesondere bei schnellen Schiffen mit hochbelasteten Propellern, extrem hohe Ruderkräfte auf, die auf den Ruderschaft, zumindest teilweise, übertragen werden. Entsprechend muss dieser eine ausreichende Festigkeit und Biegesteifigkeit aufweisen. Je nachdem welche Ruderart eingesetzt wird, können diese Anforderungen noch erhöht werden. So werden beispielsweise bei Vollschweberudern, die weder ein Ruderhorn noch ein zusätzliches Spurzapfenlager in der Stevensohle aufweisen, die größten Anforderungen an den Ruderschaft bezüglich der aufzunehmenden Kräfte gestellt.

Um das Gewicht, insbesondere von großen, Ruderschäften für große Ruder zu reduzieren und trotzdem eine ausreichende Biegefestigkeit bzw. Verwindungssteifigkeit beizubehalten, wurde in der DE 20 2005 013 583 U1 der Anmelderin vorgesehen, einen Ruderschaft derart auszubilden, dass ein oberer und ein unterer Endbereich des Ruderschaftes aus einem metallischen Material, insbesondere aus Schmiedestahl, und ein mittlerer, mit den beiden Endbereichen verbundener Abschnitt aus einem nichtmetallischen Material, insbesondere aus Faserverbundwerkstoff, ausgebildet sind. Durch die Ausbildung des mittleren Abschnittes aus nichtmetallischem Material wird vorteilhafterweise eine Gewichtsreduzierung des Ruderschaftes erreicht. Ferner brauchen nur noch der untere und der obere Endbereich des Ruderschaftes aus Schmiedestahl hergestellt werden. Für die Fertigung der Endbereiche stehen normalerweise mehr Schmiedekapazitäten zur Verfügung als für die Fertigung eines gesamten Ruderschaftes großer Länge aus Schmiedestahl.

Aus der EP 0579533 A1, die von der Prüfungsabteilung des Europäischen Patentamtes als nächstliegender Stand der Technik angesehen wird, ist ein Ruder für Groß- und Mittelgroßschiffe bekannt. Sowohl das Ruderblatt als auch der im Ruder gelagerte Ruderschaft bestehen aus Verbundwerkstoffen. Weiter befindet sich innerhalb des Ruderblattes ein Aufnahmekasten mit polygonalem Querschnitt, welche zur Lagerung des Ruderschaftes im Ruderblatt ausgebildet ist. Um eine Translation des Ruderschaftes innerhalb des Ruderblattes zu verhindern befindet sich am unteren Ende des Ruderschaftes ein metallenes Ansatzstück, welches durch eine Keilverbindung mit einem im Aufnahmekasten gelagerten Metallring verbunden ist.

Die US 6,227,131 B1 offenbart ein Ruder für Segelboote mit einer monocoqueartigen Struktur welche aus einem faserverstärkten Kunststoff besteht.

In der DE 20 2005 013 583 U1 der Anmelderin wird ein Ruderschaft für Ruder für Wasserfahrzeuge beschirieben, dessen Endabschnitte aus einem metallischen Material bestehen, wobei der Ruderschaft einen mittleren Schaftabschnitt aus einem nichtmetallischen Material aufweist.

Aus der DE 195 24 903 A1 ist eine wellenförmige Kraftübertragungseinrichtung in faserverstärkte Rahmenstrukturen sowie eine Verfahren zur Herstellung dieser bekannt. Zur Herstellung der Kraftübertragungseinrichtung wird ein metallisches Endstück durch ein Wickelverfahren mit einem rohrförmigen Hauptteil aus faserverstärktem Kunststoff verbunden.

Eine weitere Verbindung zwischen einem Metall und einem Verbundwerkstoff wird in der GB 2 258 032 A offenbart. Bei der beschriebenen Verbindung wird durch einen axialen Metallstab eine Druckkraft auf das Faserverbundmaterial ausgeübt.

Der obere Endbereich eines Ruderschaftes ist im Allgemeinen im Inneren des Wasserfahrzeuges gelagert und mit der Rudermaschine mechanisch gekoppelt, so dass die Steuerbewegung der Rudermaschine auf das Ruder übertragen werden kann. Der untere Endbereich des Ruderschaftes ist dagegen im montierten Zustand in das Ruder hineingeführt und in diesem gelagert. Bei Halbschweberudern mit Ruderhorn kann die Lagerung auch innerhalb des Ruderhorns erfolgen.

Es ist Aufgabe der vorliegenden Erfindung einen Ruderschaft für Ruder für Wasserfahrzeuge anzugeben, der gegenüber den aus dem Stand der Technik bekannten Ruderschäften verbesserte Eigenschaften, insbesondere ein reduziertes Gewicht, aufweist.

Die der Erfindung zugrundeliegende Aufgabe wird durch einen Ruderschaft für Ruder für Wasserfahrzeuge mit den Merkmalen des Anspruches 1 gelöst.

Bei der vorliegenden Erfindung weist demnach der untere Endbereich des Ruderschaftes ein nichtmetallisches Material, insbesondere einen Faserverbundwerkstoff auf, bzw. der untere Endbereich ist aus diesem gefertigt. Der untere Endbereich des Ruderschaftes umfasst dasjenige Ende des Ruderschaftes, das im montierten Zustand in das Ruder hineingeführt und im Ruder/-blatt gelagert ist. (Bei Halbschweberudern mit Ruderhorn kann der Ruderschaft auch im Ruderhorn selbst gelagert sein. Im vorliegenden Zusammenhang wird das Ruderhorn als Teil des Ruders angesehen, so dass auch bei einer Lagerung im Ruderhorn allgemein von einer Lagerung im Ruder gesprochen werden kann.) Vorteilhaft ist hierbei, dass durch die Verwendung von nichtmetallischem Material für den unteren Endbereich des Ruderschaftes das Gewicht des Ruderschaftes insgesamt reduziert werden kann. Darüber hinaus kann hierdurch gegebenenfalls der Durchmesser des Ruderschaftes gegenüber aus Schmiedestahl ausgebildeten unteren Ruderschaftendbereichen verringert werden.

Als nichtmetallisches Material wird vorteilhafterweise ein Faserverbundwerkstoff, insbesondere Kohlenstoff-Faserverbundwerkstoff, verwendet. Es können auch faserverstärkte Kunststoffe oder andere faserverstärkte Materialien verwendet werden. Als Kohlenstofffasern können insbesondere Graphitfasern verwendet werden. Der Vorteil der Verwendung von nichtmetallischen Werkstoffen, und insbesondere von faserverstärkten Werkstoffen, liegt in dem geringeren Gewicht und im Falle von faserverstärkten Werkstoffen in der hohen Steifigkeit und Festigkeit des Werkstoffes. Die Verwendung von nichtmetallischem Material auch im unteren Endbereich des Ruderschaftes, der im Ruder bzw. im Ruderhorn gelagert ist und derjenige Teil des Ruderschaftes ist, auf den die höchsten Belastungen, insbesondere Biegebelastungen, wirken, ist insbesondere für schnelle Schiffe mit hochbelasteten Propellern geeignet. Um stets, auch bei Rudern mit sehr großen Dimensionen und daher sehr großen, auf dem Ruderschaft wirkenden Lasten, eine ausreichende Festigkeit, insbesondere Biegefestigkeit, zu gewährleisten, ist bei einem erfindungsgemäßen Ruderschaft vorgesehen, dass im unteren Endbereich des Ruderschaftes ein Stützkörper vorhanden ist. Dieser Stützkörper ist zur Stützung des Ruderschaftes gegen äußere Krafteinwirkungen, insbesondere gegen Biegelasten, ausgebildet.

In einer bevorzugten Ausführungsform der Erfindung weist sowohl der untere Endbereich des Ruderschaftes als auch der mittlere, zwischen dem unteren und dem oberen Endbereich des Ruderschaftes angeordnete und mit beiden Endbereichen verbundene Bereich nichtmetallisches Material, insbesondere Faserverbundwerkstoffe, auf. Der obere Endbereich des Ruderschaftes kann ebenfalls nichtmetallisches Material aufweisen, so dass dann der gesamte Ruderschaft nichtmetallisches Material aufweist bzw. aus nichtmetallischem Material besteht. Die überwiegende Ausbildung des Ruderschaftes aus Faserverbundwerkstoffen hat u. a. den groβen Vorteil, dass das Gewicht des Ruderschaftes gegenüber herkömmlichen, vollständig aus Metall, insbesondere Schmiedestahl, bestehenden Ruderschäften, erheblich reduziert werden kann. So kann ein erfindungsgemäß hergestellter Ruderschaft aus Faserverbundwerkstoff die Hälfte bis ein Viertel des Gewichtes eines vergleichbaren Ruderschaftes aus Schmiedestahl aufweisen.

Besonders bevorzugt ist in diesem Zusammenhang, dass der Ruderschaft im Wesentlichen aus einem Rohr aus Faserverbundwerkstoff besteht. Ge-gebenefalls kann der obere, mit der Rudermaschine des Wasserfahrzeuges zu koppelnde Endbereich des Ruderschaftes jedoch auch aus einem metallischen Material, insbesondere Schmiedestahl, hergestellt sein. Der aus Schmiedestahl bestehende obere Endbereich ist dann fest mit dem Faserverbund-Rohr zu verbinden. Die Ausbildung des oberen Endbereiches des Ruderschaftes aus einem metallischen Material kann vorteilhaft sein, um eine Kompatibilität des Ruderschaftes mit der Rudermaschine des Schiffes im Kopplungsbereich zu gewährleisten. Die Kopplung des oberen Endbereiches des Ruderschaftes an die Rudermaschine kann beispielsweise durch Verbolzung oder aber auch durch andere geeignete, aus dem Stand der Technik bekannte Verbindungsmittel vorgenommen werden.

Unter dem Begriff "Rohr" ist im vorliegenden Zusammenhang jedweder längliche Hohlkörper zu verstehen, wobei das vorliegende Faserverbund-Rohr vorzugsweise, aus herstellungstechnischen Gründen, zylindrisch mit gleichbleibendem Durchmesser über die gesamte Rohrlänge ausgebildet ist. Weiterhin können grundsätzlich innerhalb des Faserverbund-Hohlkörpers ein oder mehrere andere Körper, z. B. ein im Ruderschaft verbleibender Wickeldorn o. dgl., angeordnet sein. Zur Herstellung eines derartigen Ruderschaftes können insbesondere aus dem Stand der Technik bekannte Wickelverfahren für Faserverbundmaterial verwendet werden, bei dem die Fasern um einen zylindrischen Wickeldorn o. dgl. gewickelt werden. Grundsätzlich könnte das Rohr jedoch auch zum oberen Endbereich hin als sich verjüngender Zylinder bzw. als Konus ausgebildet sein, da im oberen Bereich des Ruderschaftes geringere Kräfte vorherrschen und somit ein kleinerer Durchmesser ausreicht. Falls der obere Endbereich des Ruderschaftes aus Metall ausgebildet ist, kann die Verbindung zwischen Faserverbund- bzw. CFK-Rohr und metallenem oberen Endbereich insbesondere dadurch erreicht werden, dass der obere Endbereich auf seiner dem Faserverbund-Rohr zugewandten Seite einen zapfenartigen Vorsprung aufweist, um den herum die Fasern des Faserverbund-Rohrs gewickelt werden können. Alternativ oder zusätzlich kann eine Verklebung durch ein geeignetes Klebemittel, wie Harz o. dgl., erfolgen. Beispielsweise kann die Verbindung zwischen dem oberen Endbereich aus metallischem Material und dem Faserverbund-Rohr wie die in der DE 20 2005 013 583 U1 offenbarte Verbindung zwischen oberem Schaftende und mittlerem Ruderschaftbereich ausgeführt sein. Die diesbezügliche Offenbarung der DE 20 2005 013 583 U1 wird hiermit durch Bezugnahme ausdrücklich zum Gegenstand der vorliegenden Anmeldung gemacht.

Durch diese Ausführungsform kann auf relativ einfach herzustellende Weise ein Ruderschaft, der auch im unteren Endbereich Faserverbundmaterial aufweist, hergestellt werden. Weiterhin ist vorteilhaft, dass auch der mittlere Bereich des Ruderschaftes aus Faserverbundmaterial hergestellt ist, so dass der Ruderschaft keine Übergangsstelle zwischen dem unteren Endbereich und dem mittleren Bereich des Ruderschaftes aufweist. Dies steht im Gegensatz zu aus dem Stand der Technik bekannten Ruderschäften, bei denen der mittlere Bereich aus Faserverbundmaterial und beide Endbereiche aus Metall ausgebildet sind, wodurch sich eine mögliche Schwachstelle im Ruderschaft durch den Verbindungsbereich zwischen unterem Endbereich und mittlerem Bereich ergibt. In diesem Verbindungsbereich stellen sich ferner im Allgemeinen besonders hohe Biegebelastungen ein, so dass es hier möglicherweise zu Beschädigungen des Ruderschaftes kommen kann. Im Verbindungsbereich zwischen oberem Endbereich und mittlerem Bereich des Ruderschaftes sind die Biegebelastungen dagegen deutlich geringer, so dass hier Beschädigungen nicht zu erwarten sind. Des Weiteren kann bei einer durchgehenden Ausbildung des Ruderschaftes ohne eine Übergangsstelle zwischen unterem Endbereich und mittlerem, sich an den unteren Endbereich anschließenden Bereich des Ruderschaftes ein geringerer Ruderschaftquerschnitt gewählt werden, was vorteilhaft für das Gewicht sowie die Dimensionierung des Ruders insgesamt ist.

Aus fertigungstechnischen Gründen ist der Ruderschaft als Faserverbund-Rohr und somit mit einem Hohlraum ausgebildet. Grundsätzlich wäre jedoch auch eine massive Ausbildung des Ruderschaftes aus einem nichtmetallischen Material denkbar.

In einer bevorzugten Ausführungsform ist der im unteren Endbereich des Ruderschaftes angeordnete Stützkörper aus Metall, beispielsweise aus Stahl bzw. Edelstahl, ausgebildet. Stützkörper aus Stahl können aufgrund ihrer Materialeigenschaften bzw. Festigkeiten vorteilhaft sein. Derartige Stützkörper können beispielsweise gesondert, z. B. mittels einer Drehmaschine o. dgl., hergestellt werden und anschließend am unteren Endbereich vorgesehen bzw. in diesen eingeführt werden. Grundsätzlich ist es jedoch auch ohne weiteres möglich, Stützkörper aus nichtmetallischem Material, beispielsweise aus faserverstärktem Kunststoff o. dgl., auszubilden. Bei einem hohl ausgebildeten Ruderschaft bzw. hohl ausgebildeten unteren Endbereich des Ruderschaftes ist es insbesondere bevorzugt, den Stützkörper im Inneren des Ruderschaftes anzuordnen. Insofern ist die vorliegende Ausführungsform vorteilhafterweise bei als Faserverbund-Rohr ausgeführten Ruderschäften vorsehbar. Die Vorsehung eines Stützkörpers im unteren Endbereich ist insofern vorteilhaft, da dort im Allgemeinen die höchsten Belastungen des Ruderschaftes auftreten.

Der Stützkörper kann grundsätzlich in jeder geeigneten Form bzw. Dimension ausgebildet sein, solange er eine Stützwirkung gegen äußere Krafteinwirkungen für den unteren Endbereich des Ruderschaftes hervorruft. Wird der Stützkörper bei einem hohlen Ruderschaft im Inneren des Ruderschaftes angeordnet, ist er zweckmäßigerweise derart ausgebildet, dass er voll- bzw. zumindest teilflächig am Ruderschaft anliegt und so die auf den Ruderschaft wirkenden Kräfte auf den Stützkörper, zumindest teilweise, übertragen werden können. Besonders zweckmäßig ist es in diesem Zusammenhang, dass der Stützkörper fest mit dem Rohr verbunden ist. Hierdurch wird zum einen der Verbund zwischen Ruderschaft und Stützkörper und somit die Stützwirkung verbessert, und zum anderen wird sichergestellt, dass der Stützkörper sich stets in der die beste Stützwirkung erzielenden Position befindet. Die Verbindung zwischen Stützkörper und Ruderschaft kann, in Abhängigkeit des gewählten Materials, der Dimensionierung sowie der Anordnung des Stützkörpers auf verschiedene, geeignete Arten erfolgen. Beispielshaft seien hier das Aufschrumpfen, das Ausbilden eines Pressverbandes sowie das Verkleben genannt.

Ferner ist es, insbesondere beim im Inneren des unteren Endbereiches des Ruderschaftes angeordneten Stützkörper, vorteilhaft, wenn dieser ein Krafteinleitungs-Montageelement am Ruderschaft für die Ruderblattmontage aufweist, um die Montagekräfte in den CFK-Körper einzuleiten. Dieses Krafteinleitungs-Montageelement steht bevorzugterweise in Längsrichtung des Ruderschaftes über den Ruderschaft hinweg. Insbesondere kann das Krafteinleitungs-Montageelement zur Sicherung der Befestigung des Ruderschaftes mit dem Ruderblatt vorgesehen sein. Bei einem besonders bevorzugten Ausführungsbeispiel weist das Krafteinleitungs-Montageelement ein Gewinde für eine im Ruderblatt angeordnete Mutter, insbesondere Hydraulikmutter, o. dgl. auf.

Bei einer weiteren bevorzugten Ausführungsform der Erfindung, bei der der Stützkörper vorteilhafterweise zumindest teilweise am unteren Endbereich des Ruderschaftes anliegt, ist zumindest ein Teilbereich der Oberfläche des Stützkörpers strukturiert und/oder profiliert ausgebildet. Insbesondere ist diese Ausführungsform vorteilhaft bei einem innen angeordneten Stützkörper, um den herum ein den Ruderschaft bildendes CFK- bzw. Faserverbund-Rohr gewickelt wurde. Durch die Vorsehung der Strukturierungen bzw. Profilierungen wird der Verbund zwischen Stützkörper und Rohr verbessert.

Zweckmäßigerweise ist der Stützkörper derart ausgebildet, dass er elastische, insbesondere biegeelastische Eigenschaften, aufweist. Unter dem Begriff "elastisch" ist im vorliegenden Zusammenhang zu verstehen, dass der Stützkörper derart ausgebildet ist, dass er unter Krafteinwirkung nachgibt, d. h. seine Ausgangsform bei Krafteinwirkung, gegebenenfalls auch nur leicht, verändern kann und beim Wegfall der einwirkenden Kraft in seine Ursprungsform zurückkehrt. Eine biegeelastische Ausbildung des Stützkörpers ist insofern zweckmäßig, da der untere Ruderschaftsbereich im Wesentlichen auf Biegung beansprucht wird. Hierdurch ist es dem Stützkörper möglich, bei extrem hoher Biegebelastung gegebenenfalls nachzugeben, ohne dass diese hohe Belastung unmittelbar zum Bruch des Stützkörpers o. dgl. führt. Insofern ist es zweckmäßig, dass der Stützkörper über gewisse elastische Eigenschaften verfügt. Hierbei können gegebenenfalls schon geringfügige Formveränderungen für den vorstehend beschriebenen Zweck ausreichend sein.

Bei dieser Ausführungsform ist es bevorzugt, den Stützkörper als Hohlkörper auszubilden. Der vorteilhafterweise ins Innere des Ruderschaftes im unteren Endbereich eingeführte und am Ruderschaft anliegende Stützkörper kann sich durch die Ausbildung als Hohlkörper bei hohen Biegebelastungen nach innen zum Hohlraum hin verformen. Beim massiv ausgebildeten und spielfrei im Ruderschaft angeordnetem Stützkörper wäre eine derartige elastische Verformung, insbesondere bei aus Metall ausgebildeten Stützkörpern, schwer möglich.

Weiterhin ist der Stützkörper vorteilhafterweise zweiteilig ausgebildet, wobei vorzugsweise wenigstens eines der beiden Stützkörperteile, besonders bevorzugt beide, einen umlaufenden, insbesondere ringförmig ausgebildeten und vom Stützkörperteil vorspringenden Steg aufweisen, der mit dem anderen Stützkörperteil unter Ausbildung eines Hohlraumes, insbesondere mittels eines Pressverbandes, verbindbar ist.

Durch diese Ausbildungsform können auf einfache Weise zwei separate Stützkörperteile ausgebildet werden, die zusammen zu einem einen Hohlraum bildenden Stützkörper verbunden werden. Dies vereinfacht die Herstellung und Installation im Ruderschaft erheblich. Die vorspringenden Stege sind vorzugsweise im Außenbereich angeordnet, so dass diese an der Innenoberfläche des Ruderschaftes anliegen und diesen stützen. Wird nun eine hohe Biegebelastung aufgebracht, können sich die Stegbereiche des Stützkörpers nach innen zum Hohlraum hin bewegen und somit nachgeben, ohne dass es zu einer Beschädigung des Stützkörpers kommt. Grundsätzlich wäre es auch möglich, den Stützkörper aus mehr als zwei Teilen zusammenzusetzen.

Im Bereich des unteren Endbereiches des Ruderschaftes erfolgt sowohl die Lagerung des Ruderschaftes in einem entsprechenden Halslager als auch der Anschluss des Ruderschaftes ans Ruderblatt. In beiden Fällen wird hier auf den Mantel des Ruderschaftes eine Kraft von außen aufgebracht. Um den Ruderschaft vor diesen Krafteinwirkungen zu schützen bzw. dessen Gesamtstabilität bzw. Festigkeit zu erhöhen, ist vorteilhafterweise eine Schutzhülse (Liner) vorgesehen, die den unteren Endbereich, zumindest teilweise, umhüllt. Somit ist die Schutzhülse zweckmäßigerweise zylindrisch ausgebildet. Ferner liegt die Schutzhülse vorteilhafterweise vollflächig am Außenmantel des Ruderschaftes an und ist mit diesem fest durch geeignete Befestigungsverfahren, beispielsweise mittels Aufschrumpfen, verbunden. Vorteilhafterweise ist die Schutzhülse aus Metall, insbesondere aus Edelstahl, ausgebildet.

Da wie vorstehend angeführt die höchsten Belastungen des Ruderschaftes im Bereich des im unteren Endbereich befindlichen Ruderblattanschlusses und/oder im Bereich der Lagerung des Ruderschaftes im Halslager auftreten, ist der Stützkörper zweckmäßigerweise in einem der beiden Bereiche oder besonders bevorzugt in beiden vorgenannten Bereichen (Halslager und Ruderblattanschluss) angeordnet. Ebenso ist die Schutzhülse vorteilhafterweise in einem der beiden oder in beiden genannten Bereichen angeordnet.

Ferner wird die der Erfindung zugrundeliegende Aufgabe durch einen unteren Endbereich eines Ruderschaftes gelöst, der einen Stützkörper zur Stützung des unteren Endbereiches des Ruderschaftes gegen äußere Krafteinwirkungen umfasst, um den herum nichtmetallisches Material, insbesondere ein Faserverbundwerkstoff, angeordnet ist. Somit ist der Stützkörper, zumindest teilweise, von dem nichtmetallischen Material umhüllt bzw. umschlossen. Bei der Verwendung von Faserverbundwerkstoff ist es zweckmäßig, dass die Fasern direkt auf den Stützkörper bzw. zumindest auf Teile des Stützkörpers gewickelt werden, um so einen möglichst guten Verbund zwischen Stützkörper und Rest des unteren Endbereiches des Ruderschaftes herzustellen.

Des Weiteren wird die der Erfindung zugrundeliegende Aufgabe durch ein Verfahren zur Herstellung eines in ein Ruder für Wasserfahrzeuge, insbesondere schnelle Schiffe mit hochbelasteten Propellern, einzuführenden und im Ruder zu lagernden unteren Endbereiches eines Ruderschaftes gelöst, bei dem ein, insbesondere aus Metall ausgebildeter, Stützkörper zur Stützung des unteren Endbereiches des Ruderschaftes gegen äußere Krafteinwirkung vorgesehen wird und Fasermaterial um den Stützkörper herumgewickelt wird.

Weiterhin wird die der Erfindung zugrundeliegende Aufgabe durch ein Verfahren zur Herstellung eines Ruderschaftes eines Ruders für Wasserfahrzeuge, insbesondere schnelle Schiffe mit hochbelasteten Propellern, gelöst, das die folgenden Schritte umfasst:
a.) Vorsehen eines, insbesondere aus Metall ausgebildeten, Stützkörpers,
b.) Vorsehen eines Wickeldorns,
c.) Anordnen des Wickeldorns benachbart zum Stützkörper,
d.) Herstellen eines Faserverbund-Rohres durch Wickeln von Fasermaterial um dem Stützkörper und um den Wickeldorn,
e.) gegebenenfalls Entfernen des Wickeldorns, und
f.) gegebenenfalls Befestigen eines, insbesondere aus einem metallischen Material ausgebildeten, mit der Rudermaschine eines Wasserfahrzeuges zu koppelnden oberen Endbereichs an dem dem Stützkörper abgewandten Ende des Faserverbund-Rohres.

Bei dem erfindungsgemäßen Verfahren wird ein Stützkörper bzw. zumindest ein Stützkörperteil sowie ein Wickeldorn vorgesehen und beide benachbart zueinander, insbesondere aneinander anliegend, angeordnet. Ein Wickeldorn ist ein in der Herstellung von Faserverbundwerkstoffen häufig verwendeter, meistens zylindrischer Körper, um den herum Fasermaterial gewickelt wird. Nach Wicklung und Fertigstellung des zu wickelnden bzw. herzustellenden Körpers wird der Wickeldorn häufig aus dem Körper entfernt. Derartige Wickeldorne werden häufig auch "Mandrel" genannt. Grundsätzlich kann der Wickeldorn aber auch derart vorgesehen sein, dass er nach Wicklung des Faserverbund-Körpers bzw. des Faserverbund-Rohres im Faserverbund-Rohr verbleibt. Dies kann insbesondere bei nicht zylindrischen Wickeldornen, beispielsweise bei konischen Wickeldornen, der Fall sein.

Nach Anordnung des Wickeldorns und des Stützkörpers wird Fasermaterial um den Stützkörper und den Wickeldorn gewickelt, um den Ruderschaftkörper zu bilden. Nach Beendigung der Wicklung und Fertigstellung des Ruderschaftes bzw. des Teils des Ruderschaftes aus Faserverbundmaterial, wird der Wickeldorn gegebenenfalls entfernt. Ferner kann nun gegebenenfalls ein insbesondere aus einem metallischen Material ausgebildeter und mit der Rudermaschine des Wasserfahrzeuges zu koppelnder oberer Endbereich an dem den Ruderschaft bildenden Faserverbund-Rohr angebracht werden. Da der Stützkörper im unteren Endbereich des Faserverbund-Rohres angeordnet ist, ist der obere Endbereich zweckmäßigerweise am dem Stützkörper gegenüberliegenden Ende des Faserverbund-Rohres angeordnet.

Bevorzugterweise ist der Stützkörper zweiteilig ausgebildet und zur Durchführung der vorgenannten Schritte a.), c.) und d.) wird nur das erste Stützkörperteil verwendet. Nach Beendigung der Wicklung und Entfernung des Wickeldorns wird dann durch das dem Stützkörper abgewandte Ende des Faserverbund-Rohres das zweite Stützkörperteil in das Faserverbund-Rohr eingeführt und bis zum ersten Stützkörperteil bewegt. Danach wird das zweite Stützkörperteil zweckmäßigerweise mit dem ersten Stützkörperteil und/oder dem Faserverbund-Rohr fest verbunden.

Bevorzugte Ausführungsformen der Erfindung sind in der Zeichnung dargestellt. Es zeigen schematisch:
- Fig. 1: ein im Hinterschiffsbereich vorgesehenes Ruder mit einem in einem Ruderkoker angeordnetem Ruderschaft,
- Fig. 2: eine Ansicht auf einen Ruderschaft,
- Fig. 3: eine geschnittene Ansicht des unteren Endbereiches eines Ruderschaftes mit Stützkörper, und
- Fig. 4: eine geschnittene Ansicht eines ersten Stützkörperteils mit Wickeldorn.

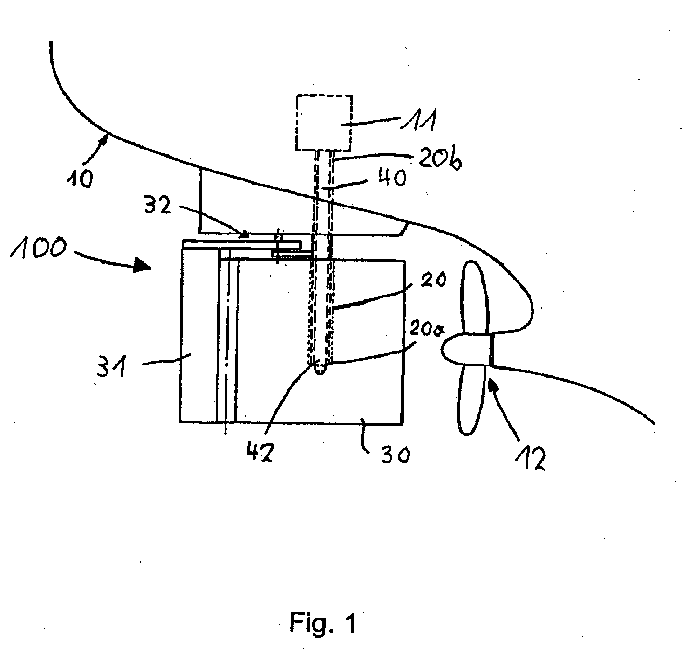

Fig. 1 zeigt ein Ruder 100 mit einem erfindungsgemäßen Ruderschaft 40, einem Ruderblatt 30 und einem Ruderkoker 20. Der als Kragträger ausgebildete Ruderkoker 20 ist mit seinem oberen Ende 20b mit einem Schiffskörper 10 fest verbunden. Das untere Ruderkokerende 20a ist tief in das Ruderblatt 30 hineingeführt. Der Ruderkoker 20 ist als hohles Ruderkokerrohr ausgebildet. In dessen Inneren ist der mit seinem oberen Endbereich mit einer im Schiffskörper 10 vorgesehenen Rudermaschine 11 verbundene, erfindungsgemäße Ruderschaft 40 angeordnet. Der Ruderschaft 40 ist durch der gesamte, in das Ruderblatt 30 hineingeführte Ruderkoker 20 hindurchgeführt und steht über das Ruderkokerende 20a vor. Der untere Endbereich 42 des Ruderschaftes 40 ist vollständig im Ruderblatt 30 angeordnet.

Das Ruder 100 ist als Vollschweberuder mit einer mittels einer Flossenanlenkung 32 anlenkbaren Flosse 31 ausgebildet und in Fahrtrichtung des Schiffskörpers 10 hinter einem Schiffspropeller 12 angeordnet. Grundsätzlich wäre es jedoch auch ohne Weiteres möglich, den erfindungsgemäßen Ruderschaft 40 bei einem als Halbschweberuder (mit Ruderhorn) ausgebildeten Ruder oder bei einem Ruder, das mittels eines Spurzapfenlagers in der Stevensohle gelagert ist, einzusetzen.

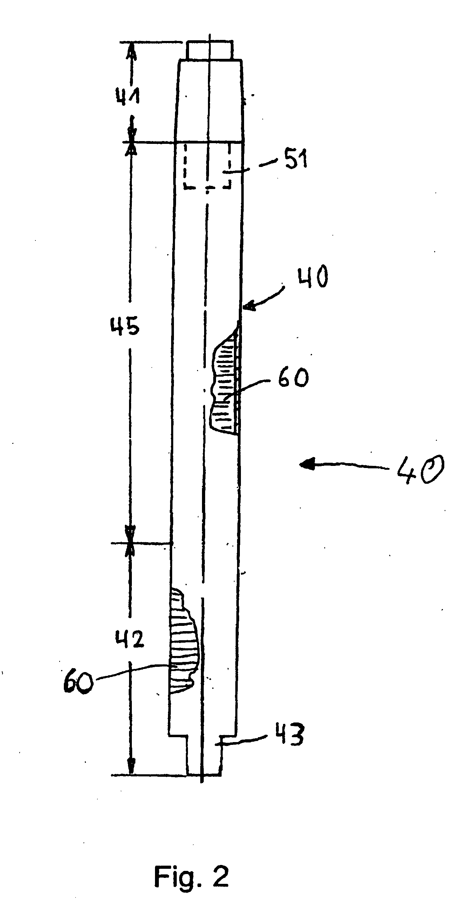

Fig. 2 zeigt eine Ansicht eines Ruderschaftes 40. Der Ruderschaft 40 ist in drei Bereiche unterteilt, nämlich einen oberen Ruderschaftendbereich 41, einen mittleren Ruderschaftbereich 45 und einen unteren Ruderschaftendbereich 42. Der obere und der untere Ruderschaftendbereich 41, 42 grenzen jeweils direkt an den mittleren Ruderschaftbereich 45 an. Der obere Endbereich 41, der an eine Rudermaschine 11 eines Schiffskörpers 10 anschließbar ist, ist aus Schmiedestahl hergestellt. Unter "Schmiedestahl" wird ein Eisen mit einem unter 0,8 % liegenden Kohlenstoffgehalt verstanden. Der mittlere Ruderschaftbereich 45 sowie auch der untere Ruderschaftendbereich 42 sind dagegen aus Faserverbundmaterial, insbesondere Kohlenstofffasern, hergestellt. Insbesondere sind der mittlere Ruderschaftbereich 45 sowie der untere Endbereich 42 aus einem im Wesentlichen durchgehenden Kokerrohr aus Faserverbundmaterial gefertigt. Die Wicklungen des Faserverbundmaterials des mittleren Ruderschaftbereiches 45 sowie des unteren Endbereiches 42 sind mit den Bezugszeichen 60 angedeutet. Vom unteren Endbereich 42 steht in Axialrichtung des Ruderschaftes 40 ein zapfenförmiges, gegenüber dem Ruderschaft 40 einen geringeren Durchmesser aufweisendes Krafteinleitungs-Montageelement 43 vor. Der aus Schmiedestahl bestehende obere Endbereich 41 weist einen in Axialrichtung des Ruderschaftes 40 zum mittleren Ruderschaftbereich 45 vorspringenden, mit dem Bezugszeichen 51 angedeuteten Zapfen auf, um den herum der dem oberen Endbereich 41 zugewandte Abschnitt des mittleren Ruderschaftbereiches 45 herumgewickelt sein kann. Grundsätzlich sind auch andere Verbindungsweisen, wie Verklebung o. dgl., möglich.

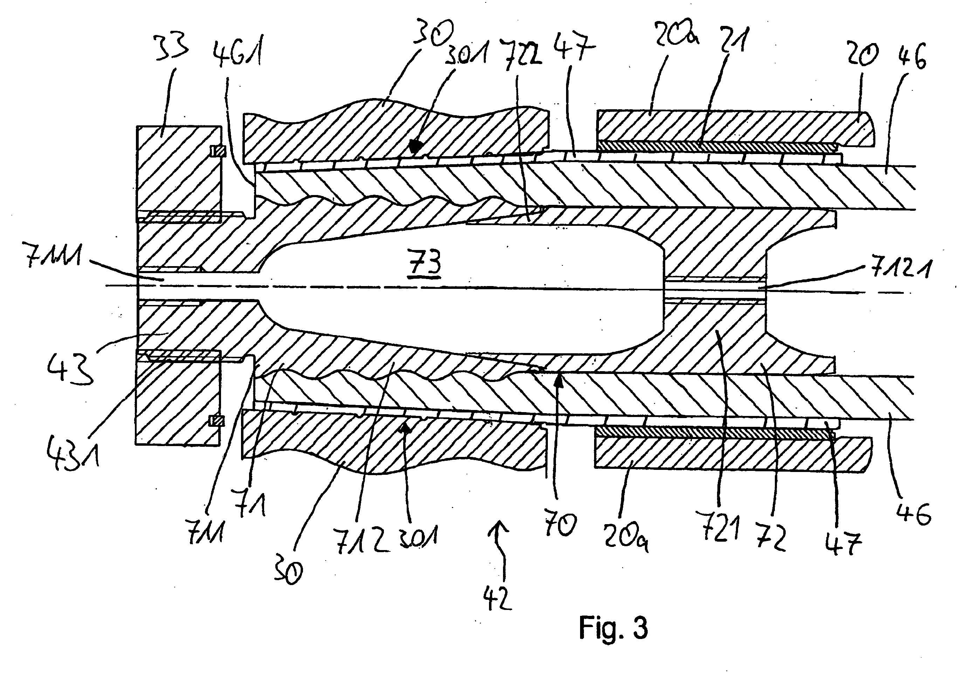

Fig. 3 zeigt einen Längsschnitt eines unteren Endbereiches 42 eines Ruderschaftes. Der untere Endbereich 42 umfasst ein aus Faserverbundmaterial bestehendes Faserverbund-Rohr 46. Das Faserverbund-Rohr 46 bildet (im Wesentlichen) den Ruderschaft 40, wobei im Inneren des Faserverbund-Rohres 46 im unteren Endbereich 42 ein Stützkörper 70 vorgesehen ist. Der Stützkörper 70 ist zweiteilig ausgebildet und umfasst ein erstes Stützkörperteil 71 und ein zweites Stützkörperteil 72. Das erste Stützkörperteil 71 ist am freien Ende 461 des Faserverbund-Rohres 46 angeordnet. Es umfasst einen am Ende 461 des Faserverbund-Rohres 46 angeordneten Grundkörper 711, von dem in das Faserverbund-Rohr 46 hinein ein am Faserverbund-Rohr 46 anliegender, umlaufender, außen am Grundkörper 711 angeordneter Steg 712 vorspringt. Das gesamte erste Stützkörperteil 71 liegt an der Innenseite des Faserverbund-Rohres 46 vollflächig an. Der vorspringende Steg verjüngt sich zu seinen Enden hin, so dass sich der zwischen den Stegen liegende Hohlraum vom Grundkörper 711 weg konisch erweitert. Der Außenbereich bzw. die Außenoberfläche des ersten Stützkörperteils 71 ist gewellt bzw. profiliert ausgebildet. Vom Grundkörper 711 springt in Richtung vom Ruderschaft 40 weg ein im Wesentlichen zylindrisches Krafteinleitungs-Montageelement 43 vor, das einen geringeren Querschnitt als der Ruderschaft 40 aufweist. An der Oberfläche des Krafteinleitungs-Montageelementes 43 ist ein Gewinde 431 vorgesehen. Auf das Gewinde 431 des Krafteinleitungs-Montageelementes 43 ist eine Hydraulikmutter 33 aufgeschraubt. Die Hydraulikmutter 33 ist zum einen zur Sicherung des Ruderschaftes 40 im Ruderblatt 30 ausgebildet. Zum anderen erzeugt die Hydraulikmutter 33 einen Pressverband zwischen dem Ruderschaft und dem Ruderblatt 30 im Ruderblattanschlussbereich 301. In diesem Ruderblattanschlussbereich 301 liegt das Ruderblatt 30 mittels Pressverband am Ruderschaft 40 bzw. einer den Ruderschaft 40 im unteren Endbereich 42 umhüllenden Schutzhülse 47 aus Edelstahl an. Die Schutzhülse 47 liegt am Außenmantel des Faserverbund-Rohres 46 an und erstreckt sich von dem freien Ende 461 des Faserverbund-Rohres 46 über den gesamten Ruderblattanschlussbereich 301 bis zum unteren Ruderkokerende 20a eines Ruderkokers 20. Zwischen Ruderkoker 20 und der Schutzhülse 47 ist ein Lager (Halslager) 21 zur Lagerung des Ruderschaftes 40 im Ruderkoker 20 vorgesehen. Im Ruderblattanschlussbereich 301 ist der Ruderschaft 40 zum freien Ende 461 hin konisch verjüngt ausgebildet.

Das zweite Stützkörperteil 72 liegt ebenso wie das erste Stützkörperteil 71 vollflächig an der Innenseite des Faserverbund-Rohres 46 an und weist einen im Wesentlichen massiven Grundkörper 721 auf. Von diesem Grundkörper 721 springt in Richtung des freien Endes 461 des Faserverbund-Rohres 46 ein außen am Grundkörper 721 angeordneter, umlaufender Steg 722 vor. Im Endbereich der Stege 712, 722 sind das erste und zweite Stützkörperteil 71, 72 durch einen Pressverband der keilförmig aneinanderliegenden Endbereiche der Stege 712, 722 verbunden. Durch die Verbindung der beiden Stützkörperteile 71, 72 im Stegbereich wird ein Stützkörper 70 gebildet, der einen Hohlraum 73 umfasst, der von den Stegen 712, 722 und den Grundkörpern 711, 721 begrenzt wird. Beide Grundkörper 711, 721 sowie das Krafteinleitungs-Montageelement 43 weisen eine in etwa mittige Bohrung 7111, 7121 zum Durchführen einer Gewindestange o. dgl. auf. Durch den Hohlraum kann sich der Stützkörper 70 im Bereich der größten Belastung zwischen Halslager 21 und Ruderblattanschlussbereich 301 elastisch in den Hohlraum 73 hinein verformen, so dass eine Art Federwirkung entsteht.

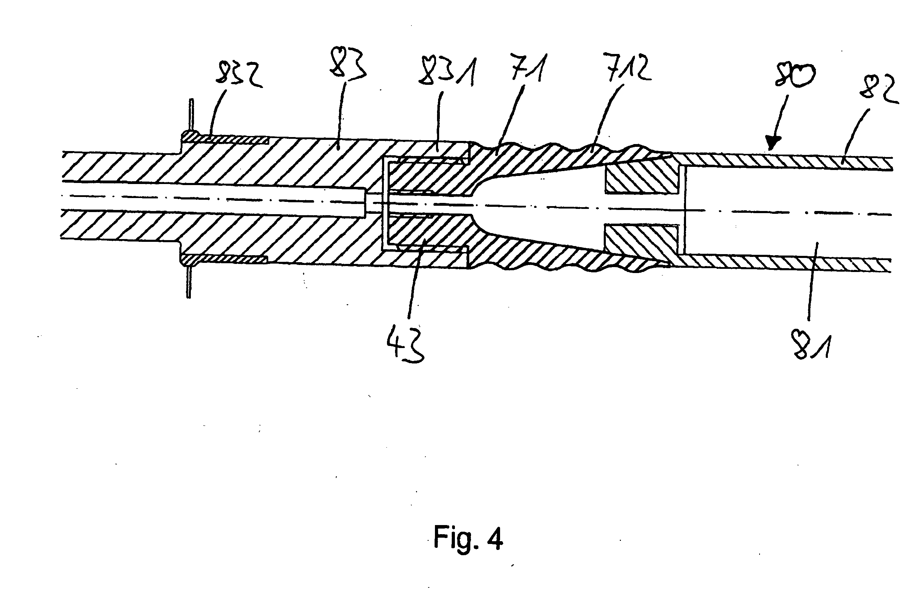

Fig. 4 zeigt das erste Stützkörperteil 71 aus Fig. 3. Ins Innere des Steges 712 greift ein Endbereich eines Wickeldorns 80 ein, der vollflächig an der Innenseite des Steges 712 umlaufend anliegt. Der Wickeldorn 80 umfasst eine zylindrische Walze 81, auf die ein an die Abmaße des zu wickelnden Ruderschaftes 40 bzw. an die Abmaße des ersten Stützkörperteils 71 angepasster Dornadapter 82 aufgesetzt ist. Das dem Steg 712 abgewandte Krafteinleitungs-Montageelement 43 des Stützkörperteils 71 wird von einem Flansch 831 eines Haltewerkzeuges 83 gehalten. Des Weiteren weist das Haltewerkzeug 83 einen Nagelkranz 832 auf, um den ein auf Rollen oder Spulen gewickeltes Fasermaterial (hier nicht dargestellt) aufsetzbar ist. Das von dem Nagelkranz 832 gehaltene Wickelmaterial kann über den profilierten Außenbereich des ersten Stützkörperteils 71 und dann weiter über den Wickeldorn 80 gewickelt werden, um so das Faserverbund-Rohr 46 zu bilden. Nach Fertigstellung des Faserverbund-Rohres 46 wird der Wickelkern 80 sowie gegebenenfalls das Haltewerkzeug 83 zur Halterung des ersten Stützkörperteils 71 entfernt. Ferner kann nunmehr durch das dem ersten Stützkörperteil 71 entfernt angeordnete Ende des Faserverbund-Rohres 46 das zweite Stützkörperteil 72 eingeführt und bis zum ersten Stützkörperteil 71 bewegt werden. Sobald die beiden Stützkörperteile 71, 72 zusammengeführt sind, kann ein Pressverband zwischen beiden hergestellt werden, so dass sich der Stützkörper 70 ausbildet. Der Pressverband kann beispielsweise durch Vereisung des zweiten Stützkörperteils 72 vor Einführung in das Faserverbund-Rohr 46 und anschließendes Erwärmen im Rohr 46 erfolgen.

### Bezugszeichenliste

- 100: Ruder

- 10: Schiffskörper
- 11: Rudermaschine
- 12: Schiffspropeller

- 20: Ruderkoker
- 20a: unteres Ruderkokerende
- 20b: oberes Ruderkokerende
- 21: Halslager

- 30: Ruderblatt
- 31: Flosse
- 32: Flossenanlenkung
- 33: Hydraulikmutter
- 301: Ruderblattanschlussbereich

- 40: Ruderschaft
- 41: oberer Endbereich
- 42: unterer Endbereich
- 43: Krafteinleitungs-Montageelement
- 45: mittlerer Ruderschaftbereich
- 46: Faserverbund-Rohr
- 47: Schutzhülse
- 431: Gewinde
- 461: freies Ende

- 51: Zapfen

- 60: Wicklungen des Faserverbundmaterials

- 70: Stützkörper
- 71: erstes Stützkörperteil
- 72: zweites Stützkörperteil
- 73: Hohlraum
- 711: Grundkörper
- 712: Steg
- 721: Grundkörper
- 722: Steg
- 7111: Bohrung
- 7121: Bohrung

- 80: Wickeldorn
- 81: Walze
- 82: Dornadapter
- 83: Haltewerkzeug
- 831: Flansch
- 832: Nagelkranz

## Patentansprüche

1. Ruderschaft (40) für Ruder (100) für Wasserfahrzeuge, wobei der in das Ruder (100) einzuführende und im Ruder (100) zu lagernde untere Endbereich (42) des Ruderschaftes (40) ein nicht metallisches Material aufweist,
**dadurch gekennzeichnet,**
**dass** im unteren Endbereich (42) des Ruderschaftes (40) ein Stützkörper (70) zur Stützung des Ruderschaftes (40) gegen äußere Krafteinwirkungen vorgesehen ist.

2. Ruderschaft gemäß Anspruch 1,
**dadurch gekennzeichnet,**
**dass** der Ruderschaft (40) im Wesentlichen aus einem Rohr (46) aus Faserverbundwerkstoff besteht, wobei gegebenenfalls der obere, mit der Rudermaschine (11) des Wasserfahrzeuges zu koppelnde Endbereich (41) des Ruderschaftes (40) aus einem metallischen Material gefertigt ist.

3. Ruderschaft gemäß Anspruch 1 oder 2,
**dadurch gekennzeichnet,**
**dass** der Stützkörper (70) im Inneren des unteren Endbereiches (42) des Ruderschaftes (40) angeordnet ist.

4. Ruderschaft nach Anspruch 3,
**dadurch gekennzeichnet,**
**dass** der Ruderschaft (40) im unteren Endbereich (42) ein aus einem nicht metallischen Material bestehendes Rohr umfasst, wobei der Stützkörper (70) im Inneren des Rohres angeordnet und fest mit dem Rohr verbunden ist.

5. Ruderschaft gemäß Anspruch 3 oder 4,
**dadurch gekennzeichnet,**
**dass** der Stützkörper (70) ein Krafteinleitungs-Montageelement (43) zur Befestigung des Ruderschaftes (40) am Ruderblatt (30) umfasst, und/oder
**dass** ein Teilbereich der Oberfläche des Stützköpers (70) strukturiert und/oder profiliert ausgebildet ist, und/oder
**dass** der Stützkörper (70) elastisch ausgebildet ist, und/oder dass der Stützkörper (70) als Hohlkörper ausgebildet ist.

6. Ruderschaft nach Anspruch 5,
**dadurch gekennzeichnet,**
**dass** der Stützkörper (70) zweiteilig ausgebildet ist.

7. Ruderschaft nach Anspruch 6,
**dadurch gekennzeichnet,**
**dass** wenigstens eines der beiden Stützkörperteile (71, 72) des zweiteilig ausgebildeten Stützkörpers (70) einen umlaufenden, vom Stützkörperteil (71; 72) vorspringenden Steg (712; 722) aufweist, der mit dem anderen Bauteil unter Ausbildung eines Hohlraumes (73) verbindbar ist.

8. Ruderschaft gemäß einem vorhergehenden Ansprüche,
**dadurch gekennzeichnet,**
**dass** der Ruderschaft (40) in seinem unteren Endbereich (42) eine den Ruderschaft (40) umhüllende, Schutzhülse (47) umfasst.

9. Ruder (100) für Wasserfahrzeuge, umfassend ein Ruderblatt (30) und einen Ruderschaft (40), wobei der Ruderschaft (40) teilweise in das Ruderblatt (30) hineingeführt ist und ein unterer, im Ruderblatt (30) angeordneter Endbereich (42) des Ruderschaftes (40) mittels eines im Ruderblatt (30) angeordneten Lagers (21) gelagert ist,
und wobei der untere Endbereich (42) des Ruderschaftes (40) ein nicht metallisches Material, aufweist,
**dadurch gekennzeichnet,**
**dass** im unteren Endbereich (42) des Ruderschaftes (40) ein Stützkörper (70) zur Stützung des Ruderschaftes (40) gegen äußere Krafteinwirkungen vorgesehen ist, wobei der Ruderschaft (40) gemäß einem der vorhergehenden Ansprüche ausgebildet ist.

10. Ruder gemäß Anspruch 9,
**dadurch gekennzeichnet,**
**dass** der Stützkörper (70) im Bereich der Lagerung des Ruderschaftes (40) im Ruderblatt (30) und/oder im Bereich des Ruderblattanschlusses (301) an den Ruderschaft (40) angeordnet ist.

11. Ruder gemäß Anspruch 9 oder 10,
**dadurch gekennzeichnet,**
**dass** im unteren Endbereich (42) eine den Ruderschaft (40) umhüllende Schutzhülse (47) vorgesehen ist, wobei die Schutzhülse (47) im Bereich der Lagerung des Ruderschaftes (40) im Ruderblatt (30) und/oder im Bereich des Ruderblattanschlusses (301) an den Ruderschaft (40) angeordnet ist.

12. In ein Ruder (100) für Wasserfahrzeuge einzuführender und im Ruder (100) zu lagernder unterer Endbereich (42) eines Ruderschaftes (40),
**dadurch gekennzeichnet,**
**dass** der untere Endbereich (42) einen Stützkörper (70) zur Stützung des unteren Endbereiches (42) des Ruderschaftes (40) gegen äußere Krafteinwirkungen umfasst, um den herum nicht metallisches Material angeordnet ist.

13. Verfahren zur Herstellung eines in ein Ruder (100) für Wasserfahrzeuge einzuführenden und im Ruder zu lagernden unteren Endbereichs (42) eines Ruderschaftes (40),
**dadurch gekennzeichnet,**
**dass** im unteren Endbereich (42) ein Stützkörper (70) zur Stützung des unteren Endbereichs (42) des Ruderschaftes (40) gegen äußere Krafteinwirkungen vorgesehen wird und Fasermaterial um den Stützkörper (70) herum gewickelt wird, wobei das Verfahren zur Herstellung eines unteren Endbereiches (42) gemäß Anspruch 12 geeignet ist.

14. Verfahren zur Herstellung eines Ruderschaftes (40) eines Ruders (100) für Wasserfahrzeuge, umfassend folgende Schritte:
a.) Vorsehen eines Stützkörpers (70),
b.) Vorsehen eines Wickeldorns (80),
c.) Anordnen des Wickeldorns (80) benachbart zum Stützkörper (70),
d.) Herstellen eines Faserverbund-Rohres (46) durch Wickeln von Fasermaterial um den Stützkörper (70) und um den Wickeldorn (80),
e.) gegebenenfalls Entfernen des Wickeldorns (80), und
f.) gegebenenfalls Befestigen eines mit der Rudermaschine (11) eines Wasserfahrzeuges zu koppelnden oberen Endbereichs (41) an dem dem Stützkörper (70) abgewandten Ende des Faserverbund-Rohres (46),
wobei das Verfahren zur Herstellung eines Ruderschaftes (40) gemäß einem der Ansprüche 1 bis 8 geeignet ist.

15. Verfahren gemäß Anspruch 14,
**dadurch gekennzeichnet,**
**dass** der Stützkörper (70) zweiteilig ausgebildet ist, und ein erster Stützkörperteil (71) für die Schritte a.), c.) und d.) verwendet wird, und
**dass** ein zweiter Stützkörperteil (72) nach Durchführung des Schrittes e.) durch das dem ersten Stützkörperteil (71) abgewandte Ende des Faserverbund-Rohres (46) in das Faserverbund-Rohr (46) eingeführt,
durch das Faserverbund-Rohr (46) hindurch bis zum ersten Stützkörperteil (71) bewegt und mit dem ersten Stützkörperteil (71) und/oder dem Faserverbund-Rohr (46) verbunden wird.

## Claims

1. A rudder stock (40) for rudders (100) for watercraft, wherein the lower end region (42) of the rudder stock (40) to be inserted into the rudder (100) and to be mounted in the rudder (100) has a non-metallic material, **characterized in that** in the lower end region (42) of the rudder stock (40) a supporting body (70) is provided for supporting the rudder stock (40) against external force effects.

2. The rudder stock according to claim 1, **characterized in that** the rudder stock (40) substantially consists of a tube (46) made of fibre-composite material, wherein if applicable the upper end region (41) of the rudder stock (40) to be coupled with the steering gear (11) of the watercraft is made of a metallic material.

3. The rudder stock according to claim 1 or 2, **characterized in that** the supporting body (70) is arranged inside the lower end region (42) of the rudder stock (40).

4. The rudder stock according to claim 3, **characterized in that** the rudder stock (40) in the lower end region (42) comprises a tube consisting of a non-metallic material, wherein the supporting body (70) is arranged inside the tube and is firmly connected with the tube.

5. The rudder stock according to claim 3 or 4, **characterized in that** the supporting body (70) comprises a force introduction-mounting element (43) for the fastening of the rudder stock (40) on the rudder blade (30), and/or that a partial region of the surface of the supporting body (70) is configured to be structured and/or profiled, and/or that the supporting body (70) is configured to be elastic and/or that the supporting body (70) is configured as a hollow body.

6. The rudder stock according to claim 5, **characterized in that** the supporting body (70) is configured as two-part.

7. The rudder stock according to claim 6, **characterized in that** at least one of the two supporting body parts (71, 72) of the supporting body (70) configured to be two-part has a circumferential web (712; 722) protruding from the supporting body part (71; 72), which can be connected with the other supporting body part by forming a hollow space (73).

8. The rudder stock according to any one of the preceding claims, **characterized in that** the rudder stock (40) comprises in its lower end region (42) a protective liner (47) enveloping the rudder stock (40).

9. A rudder (100) for watercraft, comprising a rudder blade (30) and a rudder stock (40), wherein the rudder stock (40) is partially inserted into the rudder blade (30) and a lower end region (42) of the rudder stock (30) arranged in the rudder blade is mounted by means of a bearing (21) arranged in the rudder blade (21), and wherein the lower end region (42) of the rudder stock (40) has a non-metallic material, **characterized in that** in the lower end region (42) of the rudder stock (40) a supporting body (70) is provided for supporting the rudder stock (40) against exterior force effects, wherein the rudder stock (40) is configured according to one of the preceding claims.

10. The rudder according to claim 9, **characterized in that** the supporting body (70) is arranged in the region of the mounting of the rudder stock (40) in the rudder blade (30) and/or in the region of the rudder blade connection (301) on the rudder stock (40).

11. The rudder according to claim 9 or 10, **characterized in that** in the lower end region (42) a protective liner (47) enveloping the rudder stock (40) is provided, wherein the protective liner (47) is arranged in the region of the mounting of the rudder stock (40) in the rudder blade (30) and/or in the region of the rudder blade connection (301) on the rudder stock (40).

12. A lower end region (42) of a rudder stock (40) to be inserted into a rudder (100) for watercraft and to be mounted in the rudder (100), **characterized in that** the lower end region (42) comprises a supporting body (70) for supporting the lower end region (42) of the rudder stock (40) against exterior force effects, around which non-metallic material is arranged.

13. A method for the production of a lower end region (42) of a rudder stock (40) to be inserted into a rudder (100) for watercraft and to be mounted in the rudder, **characterized in that** in the lower end region (42) a supporting body (70) is provided for supporting the lower end region (42) of the rudder stock (40) against exterior force effects and fibre material is wound around the supporting body (70), wherein the method is suitable for producing a lower end region (42) according to claim 12.

14. A method for producing a rudder stock (40) of a rudder (100) for watercraft, comprising the following steps:
a.) provision of a supporting body (70),
b.) provision of a winding mandrel (80),
c.) arrangement of the winding mandrel (80) next to the supporting body (70),
d.) creation of a fibre-composite tube (46) by winding fibre material around the supporting body (70) and around the winding mandrel (80),
e.) removal of the winding mandrel (80), if applicable, and
f.) if applicable, fastening of an upper end region (41) to be coupled with the steering gear (11) of a watercraft on the end of the fibre-composite tube (46) facing away from the supporting body (70),
wherein the method is suitable for producing a rudder stock (40) according to one of claims 1 to 8.

15. The method according to claim 14, **characterized in that** the supporting body (70) is configured as two-part and a first supporting body part (71) is used for steps a.), c.) and d.) and that a second supporting body part (72) is inserted into the fibre-composite tube (46) after performing step e.) through the end of the fibre-composite tube (46) facing away from the first supporting body part (71), is moved through the fibre-composite tube (46) to the first supporting body part (71) and is connected with the first supporting body part (71) and/or the fibre-composite tube (46).

## Revendications

1. Mèche de gouvernail (40) pour des gouvernails (100) de bateaux, dans laquelle la partie d'extrémité inférieure (42) de la mèche de gouvernail (40) à introduire dans le gouvernail (100) et à poser dans le gouvernail (100) présente un matériau non métallique,
**caractérisée en ce**
**qu'**un corps de soutien (70) est prévu dans la partie d'extrémité inférieure (42) de la mèche de gouvernail (40) pour soutenir la mèche de gouvernail (40) contre des effets extérieurs de forces.

2. Mèche de gouvernail selon la revendication 1, **caractérisée en ce que** la mèche de gouvernail (40) est composée essentiellement d'un tube (46) en matériau composite renforcé par fibres, dans lequel le cas échéant, la partie d'extrémité supérieure (41) de la mèche de gouvernail (40) à coupler avec l'appareil à gouverner (11) du bateau est en matériau métallique.

3. Mèche de gouvernail selon la revendication 1 ou 2, **caractérisée en ce que** le corps de soutien (70) est disposé à l'intérieur de la partie d'extrémité inférieure (42) de la mèche de gouvernail (40).

4. Mèche de gouvernail selon la revendication 3, **caractérisée en ce que** la mèche de gouvernail (40) dans la partie d'extrémité inférieure (42) comprend un tube en matériau non métallique, sachant que le corps de soutien (70) est disposé à l'intérieur du tube et est relié fixement au tube.

5. Mèche de gouvernail selon la revendication 3 ou 4,
**caractérisée en ce que** le corps de soutien (70) comprend un élément de montage à introduction de force (43) pour fixer la mèche de gouvernail (40) sur le safran (30),
et/ou
qu'une section de la surface du corps de soutien (70) est structurée et/ou profilée, et/ou
que le corps de soutien (70) est élastique, et/ou
que le corps de soutien (70) est formé en tant que corps creux.

6. Mèche de gouvernail selon la revendication 5, **caractérisée en ce que** le corps de soutien (70) est formé de deux pièces.

7. Mèche de gouvernail selon la revendication 6, **caractérisée en ce qu'**au moins une des deux pièces de corps de soutien (71, 72) du corps de soutien (70) formé en deux parties, présente une branche (712; 722) périphérique en saillie depuis la pièce de corps de soutien (71, 72), qui peut être reliée à l'autre pièce par la formation d'une cavité (73).

8. Mèche de gouvernail selon l'une des revendications précédentes, **caractérisée en ce que** la mèche de gouvernail (40) comprend dans sa partie d'extrémité inférieure (42), un manchon de protection (47) entourant la mèche de gouvernail (40).

9. Gouvernail (100) pour bateaux, comprenant un safran (30) et une mèche de gouvernail (40), sachant que la mèche de gouvernail (40) est partiellement introduite dans le safran (30) et une partie d'extrémité inférieure (42) de la mèche de gouvernail (40) disposée dans le safran (30) est posée via un palier (21) disposé dans le safran (30),
et dans lequel la partie d'extrémité inférieure (42) de la mèche de gouvernail (40) présente un matériau non métallique,
caractérisé en ce corps de soutien (70) est prévu dans la partie d'extrémité inférieure (42) de la mèche de gouvernail (40) pour soutenir la mèche de gouvernail (40) contre des effets extérieurs de forces, sachant que la mèche de gouvernail (40) est formée selon l'une des revendications précédentes.

10. Gouvernail selon la revendication 9, **caractérisé en ce que** le corps de soutien (70) est disposé sur la mèche de gouvernail (40) au niveau du palier de la mèche de gouvernail (40) dans le safran (30) et/ou au niveau du raccordement du safran (301).

11. Gouvernail selon la revendication 9 ou 10, **caractérisé en ce qu'**un manchon de protection (47) entourant la mèche de gouvernail (40) est prévu dans la partie d'extrémité inférieure (42), le manchon de protection (47) étant disposé sur la mèche de gouvernail (40) au niveau du palier de la mèche de gouvernail (40) dans le safran (30) et/ou au niveau du raccordement du safran (301).

12. Partie d'extrémité inférieure (42) d'une mèche de gouvernail (40) à introduire dans un gouvernail (100) pour bateaux et à poser dans le gouvernail (100), **caractérisée en ce que** la partie d'extrémité inférieure (42) comprend un corps de soutien (70) pour soutenir la partie d'extrémité inférieure (42) de la mèche de gouvernail (40) contre des effets extérieurs de forces, autour duquel du matériau non métallique est disposé.

13. Procédé de fabrication d'une partie d'extrémité inférieure (42) d'une mèche de gouvernail (40) à introduire dans un gouvernail (100) pour bateaux et à poser dans le gouvernail, **caractérisée en ce qu'**un corps de soutien (70) pour soutenir la partie d'extrémité inférieure (42) de la mèche de gouvernail (40) contre des effets extérieurs de forces est prévu dans la partie d'extrémité inférieure (42) et que du matériau de fibres est enroulé autour du corps de soutien (70), sachant que le procédé est approprié pour la construction d'une partie d'extrémité inférieure (42) selon la revendication 12.

14. Procédé de fabrication d'une mèche de gouvernail (40) d'un gouvernail (100) pour bateaux, comprenant les étapes suivantes :
a) prévision d'un corps de soutien (70),
b) prévision d'un mandrin de bobinage (80),
c) agencement du mandrin de bobinage (80) dans le voisinage du corps de soutien (70),
d) fabrication d'un tube (46) en matériau composite renforcé par fibres par enroulement du matériau de fibres autour du corps de soutien (70) et autour du mandrin de bobinage (80),
e) le cas échéant, éloignement du mandrin de bobinage (80), et
f) le cas échéant, fixation d'une partie d'extrémité supérieure (41) à coupler avec l'appareil à gouverner (11) d'un bateau sur l'extrémité du tube (46) en matériau composite renforcé par fibres détournée du corps de soutien (70),
sachant que le procédé est approprié pour la fabrication d'une mèche de gouvernail (40) selon l'une des revendications 1 à 8.

15. Procédé selon la revendication 14, **caractérisé en ce que** le corps de soutien (70) est formé de deux pièces et qu'une première pièce de corps de soutien (71) est employée pour les étapes a), c) et d) et qu'une deuxième pièce de corps de soutien (72), après exécution de l'étape e), est introduite dans le tube (46) en matériau composite renforcé par fibres par l'extrémité du tube (46) en matériau composite renforcé par fibres détournée de la première pièce de corps de soutien (71), déplacée à travers le tube (46) en matériau composite renforcé par fibres jusqu'à la première pièce de corps de soutien (71)et reliée à la première pièce de corps de soutien (71) et/ou au tube (46) en matériau composite renforcé par fibres.
